(19) Europäisches Patentamt / European Patent Office / Office européen des brevets

(11) **EP 2 699 417 B1**

(12) **EUROPEAN PATENT SPECIFICATION**

(45) Date of publication and mention of the grant of the patent:
**18.05.2016 Bulletin 2016/20**

(51) Int Cl.:
**B32B 27/32** *(2006.01)*    **B32B 5/02** *(2006.01)*
**B32B 7/04** *(2006.01)*

(21) Application number: **12718531.2**

(22) Date of filing: **20.04.2012**

(86) International application number:
**PCT/US2012/034410**

(87) International publication number:
**WO 2012/145599 (26.10.2012 Gazette 2012/43)**

(54) **ZERO-STRAIN STRETCH LAMINATE WITH ENHANCED STRENGTH, APPEARANCE AND TACTILE FEATURES, AND ABSORBENT ARTICLES HAVING COMPONENTS FORMED THEREFROM**

ELASTISCHES LAMINAT MIT DEHNUNGSFAKTOR NULL MIT VERBESSERTER FESTIGKEIT,VERBESSERTEM ERSCHEINUNGSBILD UND TAKTILEN EIGENSCHAFTEN SOWIE SAUGFÄHIGE ARTIKEL MIT DARAUS HERGESTELLTEN BESTANDTEILEN

STRATIFIÉ EXTENSIBLE À DÉFORMATION NULLE AVEC CARACTÉRISTIQUES AMÉLIORÉES DE RÉSISTANCE, D'ASPECT ET DE TOUCHER, ET ARTICLES ABSORBANTS AYANT DES COMPOSANTS FORMÉS AVEC CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011 US 201113090761**

(43) Date of publication of application:
**26.02.2014 Bulletin 2014/09**

(73) Proprietor: **The Procter & Gamble Company Cincinnati, OH 45202 (US)**

(72) Inventor: **LANGDON, Frederick, Michael Cincinnati, Ohio 45236 (US)**

(74) Representative: **Kremer, Véronique Marie Joséphine**
**Procter & Gamble Service GmbH**
**IP Department**
**Frankfurter Strasse 145**
**61476 Kronberg im Taunus (DE)**

(56) References cited:
EP-A1- 2 158 888    JP-A- 2010 005 938
US-A1- 2007 293 111    US-A1- 2011 024 940

## Description

FIELD OF THE INVENTION

The invention relates to a multi-layer stretch laminate material, and absorbent articles such as disposable diapers and training pants having components made of such material.

BACKGROUND OF THE INVENTION

The business of manufacturing and marketing disposable absorbent articles for personal care or hygiene (such as disposable diapers, training pants, adult incontinence undergarments, feminine hygiene products, breast pads, care mats, bibs, wound dressing products, and the like) is relatively capital intensive and highly competitive. To maintain or grow their market share and thereby maintain a successful business, manufacturers of such articles must continually strive to enhance their products in ways that serve to differentiate them from those of their competitors, while at the same time controlling costs so as to enable competitive pricing and the offering to the market of an attractive value-to-price proposition.

One way in which some manufacturers may seek to enhance such products is through enhancements to softness and comfortability. Parents and caregivers naturally seek to provide as much comfort as they can for their babies, and utilizing products such as disposable diapers that they perceive as relatively soft and comfortable provides reassurance that they are doing what they can to provide comfort in that context. With respect to other types of disposable absorbent articles that are designed to be applied and/or worn close to the skin, softness and comfortability may be important as well.

Stretch laminates are used to form components of wearable articles, for example, disposable diapers and training pants. These components may include elastic fastening members of diapers, and side panels of training pants. Elasticity of such components may be desired to help provide a snug yet comfortable fit, while softness, pliability and breathability may be desired for comfort next to the skin and avoidance of skin irritation, chafing or over-hydration. Stretch laminates currently are produced in various types and by various methods.

One type is known as a pre-strained laminate. It is typically formed of a plurality of parallel and evenly-spaced elastomeric strands laminated between two outer layers of nonwoven web, adhered together by glue. During manufacturing, the elastomeric strands are strained and held in the strained condition during lamination. Following lamination, upon relaxation of the elastomeric strands, the nonwoven outer layers gather or bunch and form somewhat uneven, random corrugations or rugosities oriented generally transversely to the direction of strain. The gathered/bunched nonwoven material is available to accommodate stretching of the laminate.

This type of stretch laminate has good opacity in the unstretched condition as a result of the gathered/bunched material. This opacity diminishes substantially with stretching, which may be deemed undesirable. Additionally, this type of stretch laminate may not have particularly soft feel or appearance, or attractive surface texture.

Another type of stretch laminate is known as a zero-strain stretch laminate. It is typically formed, in one variety, also of parallel and evenly-spaced elastomeric strands laminated between two outer layers of nonwoven web, adhered together by glue. In another variety, an elastomeric film may be used rather than elastomeric strands. In manufacturing, the elastomeric elements are not laminated between the nonwoven layers in a pre-strained condition. Rather, lamination is performed with all materials in a substantially relaxed condition, and, following lamination, the laminate is incrementally stretched or activated in one or more directions. This creates separations or breaks in the fibers in the outer nonwovens along closely-spaced lines, which both renders the laminate elastically extensible in the direction of incremental stretching/activation, and creates loose fiber ends that help provide a soft, "fuzzy" appearance. This type of stretch laminate has a very soft and pliable feel and good opacity in the unstretched condition, but lacks any pronounced texture, and loses opacity in the stretched condition. Additionally, since the nonwoven fibers may be separated or broken by incremental stretching/activation, the tensile strength of the laminate in the stretch direction is effectively limited to the tensile strength of the elastomeric film.

Thus, current types of stretch laminate, and components of articles made of stretch laminate, leave room for improvement in features that enhance opacity, tensile strength and appearance.

BRIEF DESCRIPTION OF THE DRAWINGS

Fig. 1 is an exploded, schematic, perspective view of a portion of a laminate having a plurality of component layers;

Fig. 2A is a schematic plan view of a portion of a laminate in relaxed condition, illustrating primary stretch zones;

Fig. 2B is a schematic plan view of a portion of a laminate in stretched condition, illustrating primary stretch zones;

Fig. 3 is a schematic plan view of a layer of a portion of laminate, illustrating a pattern of adhesive deposit;

Fig. 4 is a schematic plan view of a layer of a portion of laminate, illustrating another pattern of adhesive deposit;

Fig. 5A is a view of a design or image having original dimension D along a stretch direction S;

Fig. 5B is a view of a proportionately compressed version of the design or image in Fig. 5A, having proportionately compressed dimension $D_C$ along a stretch direction S;

Fig. 6A is a depiction of an example of a print pattern;

Fig. 6B is a depiction of another example of a print pattern; and

Fig. 6C is a depiction of another example of a print pattern.

DETAILED DESCRIPTION OF EXEMPLARY EMBODIMENTS

Definitions

"Absorbent article" refers to devices that absorb and contain body exudates, and, more specifically, refers to devices that are placed against or in proximity to the body of the wearer to absorb and contain the various exudates discharged from the body. Absorbent articles may include diapers, training pants, adult incontinence undergarments and pads, feminine hygiene products, breast pads, care mats, bibs, wound dressing products, and the like. As used herein, the term "exudates" includes, but is not limited to, urine, blood, vaginal discharges, breast milk, sweat and fecal matter.

"Absorbent core" means a structure typically disposed between a topsheet and backsheet of an absorbent article for absorbing and containing liquid received by the absorbent article. The absorbent core may also include a cover layer or envelope. The cover layer or envelope may comprise a nonwoven. In some examples, the absorbent core may include one or more substrates, an absorbent polymer material, and a thermoplastic adhesive material/composition adhering and immobilizing the absorbent polymer material to a substrate, and optionally a cover layer or envelope.

"Bicomponent" refers to fiber having a cross-section comprising two discrete polymer components, two discrete blends of polymer components, or one discrete polymer component and one discrete blend of polymer components. "Bicomponent fiber" is encompassed within the term "Multicomponent fiber." A Bicomponent fiber may have an overall cross section divided into two or more subsections of the differing components of any shape or arrangement, including, for example, coaxial subsections, core-and-sheath subsections, side-by-side subsections, radial subsections, etc.

"Cross direction" - with respect to a web material, refers to the direction along the web material substantially perpendicular to the direction of forward travel of the web material through the manufacturing line in which the web material is manufactured. With respect to a nonwoven batt moving through the nip of a pair of calender rollers to form a bonded nonwoven web, the cross direction is perpendicular to the direction of movement through the nip, and parallel to the nip.

"Disposable" is used in its ordinary sense to mean an article that is disposed or discarded after a limited number of usage events over varying lengths of time, for example, less than about 20 events, less than about 10 events, less than about 5 events, or less than about 2 events.

"Diaper" refers to an absorbent article generally worn by infants and incontinent persons about the lower torso so as to encircle the waist and legs of the wearer and that is specifically adapted to receive and contain urinary and fecal waste. As used herein, term "diaper" also includes "pant" which is defined below.

As used herein, the term "extensible" refers to the property of a material (or a composite of multiple materials) that can extend, without substantial rupture or breakage, to a strain of 100% in the Hysteresis Test (as described herein). Micro-sized rupture or breakage of a material is not considered substantial rupture or breakage. However, macro-sized ruptures through the structure (e.g. one or more large tears such as tears greater than about 5 millimeters in any direction, or breaking into two or more pieces, or resulting in significant structural degradation which may render the material unusable for its intended purpose) are considered substantial ruptures or breakage. A material that does not meet this definition for "extensible" is considered "inextensible." An extensible material may be elastic or ductile as defined herein.

As used herein, the term "elastic" or "elastomeric" refers to the property of an extensible material (or a composite of multiple materials) that can extend, without substantial rupture or breakage, to a strain of 100% in the Hysteresis Test, with a set less than or equal to 10% of the elongation as measured according to the Hysteresis Test. For example, a material that has an initial length of 25 millimeters and extends 25 millimeters to an extended length of 50 millimeters (100% elongation) with a set of 2 millimeters (8% of the elongation), when subjected to the Hysteresis Test, would be considered elastic. An elastic material is considered elastically extensible.

As used herein, the term "ductile" refers to the property of an extensible material (or a composite of multiple materials) that can extend, without substantial rupture or breakage, to a strain of 100% in the Hysteresis Test, with a set greater than 10% of the elongation as measured according to the Hysteresis Test. For example, a material that has an initial length of 25 millimeters and extends 25 millimeters to an extended length of 50 millimeters (100% elongation) with a set of 3 millimeters (12% of the elongation), when subjected to the Hysteresis Test, would be considered ductile.

"Fiber" and "filament" are used interchangeably.

"Film" - means a skin-like or membrane-like layer of material formed of one or more polymers, which does not have a form consisting predominately of a web-like structure of consolidated polymer fibers and/or other fibers.

"Length" or a form thereof, with respect to a diaper or training pant, refers to a dimension measured along a direction generally perpendicular to the waist edges when the front and rear regions have been separated (such as by unfastening fastening members or severing or separating side panels) and the article has been laid flat on a horizontal surface, and stretched out against contraction induced by elastic members.

"Machine direction" - with respect to a web material, refers to the direction along the web material substantially parallel to the direction of forward travel of the web material through the manufacturing line in which the web material is manufactured.

"Monocomponent" refers to fiber formed of a single polymer component or single blend of polymer components, as distinguished from Bicomponent or Multicomponent fiber.

"Multicomponent" refers to fiber having a cross-section comprising more than one discrete polymer component, more than one discrete blend of polymer components, or at least one discrete polymer component and at least one discrete blend of polymer components. "Multicomponent fiber" includes, but is not limited to, "Bicomponent fiber." A Multicomponent fiber may have an overall cross section divided into subsections of the differing components of any shape or arrangement, including, for example, coaxial subsections, core-and-sheath subsections, side-by-side subsections, radial subsections, etc.

A "nonwoven" is a manufactured sheet or web of directionally or randomly oriented fibers, consolidated and bonded together by friction, cohesion, adhesion or one or more patterns of bonds and bond impressions created through localized compression and/or application of heat or heating energy, or a combination thereof. The term does not include fabrics which are woven, knitted, or stitch-bonded with yarns or filaments. The fibers may be of natural or man-made origin and may be staple or continuous filaments or be formed in situ. Commercially available fibers have diameters ranging from less than about 0.001 mm to more than about 0.2 mm and they come in several different forms: short fibers (known as staple, or chopped), continuous single fibers (filaments or monofilaments), untwisted bundles of continuous filaments (tow), and twisted bundles of continuous filaments (yarn). Nonwoven fabrics can be formed by many processes such as meltblowing, spunbonding, solvent spinning, electro spinning, and carding. The basis weight of nonwoven fabrics is usually expressed in grams per square meter (gsm).

"Pant" or "training pant", as used herein, refer to disposable garments having a waist opening and leg openings designed for infant or adult wearers. A pant may be placed in position on the wearer by inserting the wearer's legs into the leg openings and sliding the pant into position about a wearer's lower torso. A pant may be preformed by any suitable technique including, but not limited to, joining together portions of the article using refastenable and/or non-refastenable bonds (*e.g.,* seam, weld, adhesive, cohesive bond, fastener, etc.). A pant may be preformed anywhere along the circumference of the article (*e.g.,* side fastened, front waist fastened).

While the terms "pant" or "pants" are used herein, pants are also commonly referred to as "closed diapers," "prefastened diapers," "pull-on diapers," "training pants," and "diaper-pants". Examples of pants are disclosed in U.S. Pat. No. 5,246,433, issued to Hasse, et al. on September 21, 1993; U.S. Pat. No. 5,569,234, issued to Buell et al. on October 29, 1996; U.S. Pat. No. 6,120,487, issued to Ashton on September 19, 2000; U.S. Pat. No. 6,120,489, issued to Johnson et al. on September 19, 2000; U.S. Pat. No. 4,940,464, issued to Van Gompel et al. on July 10, 1990; U.S. Pat. No. 5,092,861, issued to Nomura et al. on March 3, 1992; U.S. Patent Publication No. 2003/0233082 A1, entitled "Highly Flexible And Low Deformation Fastening Device", filed on June 13, 2002; U.S. Pat. No. 5,897,545, issued to Kline et al. on April 27, 1999; U.S. Pat. No. 5,957,908, issued to Kline et al on September 28, 1999.

"Tensile strength" refers to the maximum tensile force (Peak Force) a material will sustain before tensile failure.

"Thickness" and "caliper" are used herein interchangeably.

"Width" or a form thereof, with respect to a diaper or training pant, refers to a dimension measured along a direction generally parallel to the waist edges when the front and rear regions have been separated (such as by unfastening fastening members or severing or separating side panels) and the article has been laid flat on a horizontal surface, and stretched out against contraction induced by elastic members.

"Z-direction," with respect to a web, means generally orthogonal or perpendicular to the plane approximated by the web in the machine and cross direction dimensions.

Examples of the present invention include stretch laminates having improved opacity, tensile strength, and appearance, and absorbent articles having components formed of such laminates.

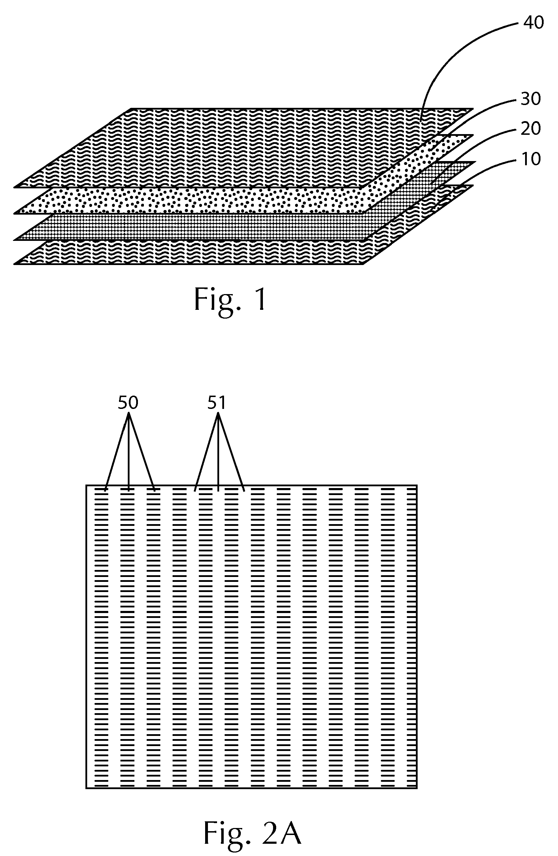

Fig. 1 is an exploded schematic view of a section of stretch laminate. The stretch laminate may include a first layer 10, a second layer 20, a third layer 30, and optionally, a fourth layer 40.

First layer 10 and optional fourth layer 40 may each be a layer of flocking adhered to the adjacent layer, or a layer of nonwoven web. First layer 10 and fourth layer 40 may each be adhered to the adjacent layer by any suitable adhesive.

If a nonwoven web is used to form first layer 10 and/or fourth layer 40, the nonwoven web may be any suitable nonwoven web recognized as suitable for use as a component of stretch laminates and/or disposable absorbent articles. Suitable nonwoven web materials that may be useful in the present invention also include, but are not limited to spunbond, meltblown, spunmelt, solvent-spun, electrospun, carded, film fibrillated, melt-film fibrillated, air-laid, dry-laid, wet-laid staple fibers, and other and other nonwoven web materials formed in part or in whole of polymer fibers, as known in the art. The nonwoven web may be formed predominately of polymeric fibers. In some examples, suitable non-woven fiber materials may include, but are not limited to polymeric materials such as polyolefins, polyesters, polyamide, or specifically, polypropylene (PP), polyethylene (PE), polylactic acid (PLA), polyethylene terephthalate (PET) and/or blends thereof. In some examples, the fibers may be formed of PP/PE blends such as described in U.S. Pat. No. 5,266,392 to Land. Nonwoven fibers may be formed of, or may include as additives or modifiers, components such as aliphatic polyesters, thermoplastic polysaccharides, or other biopolymers. Further useful nonwovens, fiber compositions, formations of fibers and nonwovens and related methods are described in U.S. Pat. No. 6,645,569 to Cramer et al.; U.S. Pat. No. 6,863,933 to Cramer et al.; and U.S. Pat. No. 7,112,621 to Rohrbaugh et al.; and in co-pending U.S patent application Ser. Nos. 10/338,603 and 10/338,610 by Cramer et al.; and 13/005,237 by Lu et al.

The individual fibers may be monocomponent or multicomponent. The multicomponent fibers may be bicomponent, such as in a core-and-sheath or side-by-side arrangement. Often, the individual components comprise aliphatic polyolefins such as polypropylene or polyethylene, or their copolymers, aliphatic polyesters, thermoplastic polysaccharides or other biopolymers.

According to one example, the nonwoven may comprise a material that provides good recovery when external pressure is applied and removed. Further, according to one example, the nonwoven may comprise a blend of different fibers selected, for example from the types of polymeric fibers described above. In some embodiments, at least a portion of the fibers may exhibit a spiral curl which has a helical shape. According to one example, the fibers may include bicomponent fibers, which are individual fibers each comprising different materials, usually a first and a second polymeric material. It is believed that the use of side-by-side bi-component fibers is beneficial for imparting a spiral curl to the fibers.

In order to enhance softness perceptions of the laminate, nonwovens forming the backsheet may be treated by hydrojet impingement, which may also be known as hydroenhancement, hydroentanglement or hydroengorgement. Such nonwovens and processes are described in, for example, U.S. Pats. Nos. 6,632,385 and 6,803,103, and U.S. Pat. App. Pub. No. 2006/0057921.

A nonwoven may also be treated by a "selfing" mechanism. By "selfing" nonwovens, high densities of loops (> 150 in 2) may be formed which protrude from the surface of the nonwoven substrate. Since these loops act as small flexible brushes, they create an additional layer of springy loft, which may enhance softness. Nonwovens treated by a selfing mechanism are described in U.S. Pat. App. Pub. No. US 2004/0131820.

Second layer 20 may be a layer of elastomeric film. The elastomeric film may be any thermoplastic polymer known in the art, and suitable for use as the elastomeric component of a stretch laminate of the type contemplated herein. In certain embodiments, the elastomeric film may comprise an elastomeric polymer. Suitable elastomeric polymers include thermoplastic elastomers that may be in the form of homopolymers and copolymers including but is not limited to block copolymers, random copolymers, alternating copolymers, and graft copolymers. The elastomeric film may comprise from about 0.01% to about 100%, by weight, of the thermoplastic elastomer. Suitable thermoplastic elastomers may include polyvinylarenes, polyolefins, metallocene-catalyzed polyolefins, polyesters, polyurethanes, polyether amides, and combinations thereof. Suitable elastomeric films may include vinylarene block copolymers. Block copolymers include variants such as diblock, triblock, tetrablock, or other multi-block copolymers having at least one vinylarene block. Exemplary vinylarene block copolymers include styrene-butadiene-styrene, styrene-isoprene-styrene, styrene-ethylene/ butylene-styrene, styrene-ethylene/propylene-styrene, and the like. Commercially available styrenic block copolymers include KRATON from the Kraton Polymer Corporation, Houston, TX; SEPTON from Kuraray America, Inc., New York, NY; and VECTOR from Dexco Chemical Company, Houston, TX. Commercially available metallocene-catalyzed polyolefins include EXXPOL, EXACT, and VISTAMAXX from Exxon Chemical Company, Baytown, TX; AFFINITY and ENGAGE from Dow Chemical Company, Midland, MI. Commercially available polyurethanes include ESTANE from Noveon, Inc., Cleveland, OH. Commercial available polyether amides include PEBAX from Atofina Chemicals, Philadelphia, PA. Commercially available polyesters include HYTREL from E. I. DuPont de Nemours Co., Wilmington, DE. The elastomeric film may also contain various additives including viscosity modifiers, processing aids, colorants, fillers, stabilizers, anti-oxidants, and/or bacteriostats. These additives are well known in the art and may account for about 0.01% to about 60% of the total weight of the elastomeric film. In certain embodiments, the composition comprises from about 0.01% to about 25% by weight or, alternatively, from about 0.01% to about 10% by weight of additives. In other alternatives, however, second layer 20 may be an elastomeric scrim material or an arrangement of strips or strands of elastomeric material. The strips or strands may be arranged in parallel, oriented with their longest dimensions along the stretch direction. A scrim formed of elastomeric material may be desired in some circumstances because it may be handled in the manner of a web material (like a film); it is highly air-permeable (breathable); and it may display less Poisson-effect (shrinkage in the dimension perpendicular to the stretch direction) and less hysteresis when stretched. In other circumstances, however, the Poisson-effect may be deemed desirable because it may enhance z-direction displacement of the third layer 30, in a pattern, upon stretching of the laminate, as described further below.

Third layer 30 may be formed of plastically deformable and/or ductile polymeric film. Third layer 30 may be formed of a film made of polyethylene (PE) or a blend of polymers including PE. Materials suitable for third layer 30 may include polyolefins such as polyethylenes, including linear low density polyethylene (LLDPE), low density polyethylene (LDPE), ultra low density polyethylene (ULDPE), high density polyethylene (HDPE), or polypropylene and blends thereof with the above and other materials. Third layer 30 may be a film formed of a blend, layer(s) or other structure including polymeric materials and may include more than 50% by weight polyethylene. Other materials that may be suitable include ductile and/or plastically deformable polymeric film materials disclosed in U.S. Pats. Nos. 5,518,801; 5,691,035; 5,723,087; 5,891,544; and 5,968,029.

If the laminate is to be used in an application in which it is close to or in contact with a wearer's skin, it may be desirable that the laminate and its components be suitably breathable to promote comfort and avoid over-hydration or chafing. Accordingly, it may be desirable that third layer 30 be a breathable film. For example, third layer 30 may be formed of any of a number of PE-based films that are formed with apertures or micro-apertures, such as vacuum-formed films, such as are available from RKW SE of Frankenthal, Germany and/or RKW US, Inc., Rome, Georgia, U.S.A. One suitable example may be a PE-based film of the designation 11790 from RKW. Other suitable examples may include apertured formed films that are often used for topsheets on absorbent articles. Thus, the surface of the formed film which is in contact with the body remains dry, thereby creating a more comfortable feel for the wearer. Examples of formed films are described in U.S. Pat. No. 3, 929,135 issued to Thompson; U.S. Pat. No. 4,324,246 issued to Mullane et al.; U.S. Pat. No. 4,463, 045 issued to Ahr et al.; U.S. Pat. No. 4,629,643 issued to Curro et al.; U.S. Pat. No. 4,637,819 issued to Ouellette et al.; U.S. Pat. No. 4,839,216 issued to Curro et al.; U.S. Pat. No. 5,006,394 issued to Baird on Apr. 9, 1991, and U.S. Pat. No. 5,366,782 issued to Curro et al. Other examples of suitable films include MICROPRO microporous films, and films designated BR137P and BR137U, available from Clopay Corporation, Mason, Ohio. Other suitable films include those manufactured by Tredegar Industries Inc. of Terre Haute, Ind. and sold under the trade names X15306, X10962, and X10964. Other suitable films may include breathable materials that permit vapors to escape while still preventing liquids from passing through. Exemplary breathable films include microporous films such as manufactured by Mitsui Toatsu Co., of Japan under the designation ESPOIR, and by EXXON Chemical Co., of Bay City, Texas, under the designation EXXAIRE. Suitable breathable composite materials comprising polymer blends are available from Clopay Corporation, Cincinnati, Ohio under the name HYTREL blend P1 8-3097. Other examples of such breathable composite materials are described in greater detail in PCT Application No. WO 95/16746, published on Jun. 22, 1995 in the name of E. I. DuPont. Other breathable apertured formed films are described in U.S. Pat. No. 5,571,096 issued to Dobrin et al.

The second and third layers may be bonded together by a suitable adhesive in a manner more fully described below. In other examples, the second and third layers may be bonded together by mechanical bonding created by compression exerted on and through the layers between bonding rollers or other compressing devices at compression sites ("compression" bonds); localized application of heat, ultrasonic or other heating energy exerted on and through the layers at bond sites ("thermal" or "ultrasonic" bonds); or a combination of compression exerted on and through the layers between bonding rollers or other compressing devices at compression sites together with heat, ultrasonic energy or other heating energy directed to the compression sites ("combination" bonds), to effect localized deformation, physical entanglement and/or fusing, or a combination thereof, of the separate layers of materials at or about bond sites.

A three- or four-layer laminate as described above may be activated or incrementally stretched across its entire cross-direction width, or across a more limited extensible zone constituting only a portion of the cross-direction width and/or a portion of the machine-direction length, according to the process described in, for example, U.S. Pats. Nos. 5,167,897; 5,156,793; and 5,143,679; or U.S. App. Ser. Nos. 10/288,095; 10/288,126; 10/429,433; 11/410,170; 11/811,130; 11/899,656; 11/899,810; 11/899,811; 11/899,812; 12/204,844; 12/204,849; 12/204,854; 12/204,858; or 12/204,864, to make the laminate elastically extensible. The laminate may be activated or incrementally stretched in the cross (x) direction, the machine direction, or in any other direction according to the design of the web desired, and the corresponding activating/incremental stretch mechanism employed.

In another example, the laminate may be subjected to any of the processes described in U.S. Patents Nos. 5,968,029; 5,891,544; 5,723,087; 5,691,035; and 5,518,801. These processes are similar to activation, but leave unstretched bands of material disposed between/among zones or bands of incrementally stretched material. The unstretched bands may serve as bands of greater resistance to stretch and/or increased tension in use, and may also serve to allow an article have a stretch component formed of the laminate to stretch to fit, whereby the bands left unstretched by processing are both plastically and elastically stretched by the consumer/wearer, only to the extent required to fit the wearer. As will be appreciated, the rollers or other incremental stretching equipment used in the process may be designed so as to create the arrangement of stretched zones and unstretched bands such that the unstretched bands have their greatest dimensions oriented predominately with or even parallel with the stretch direction.

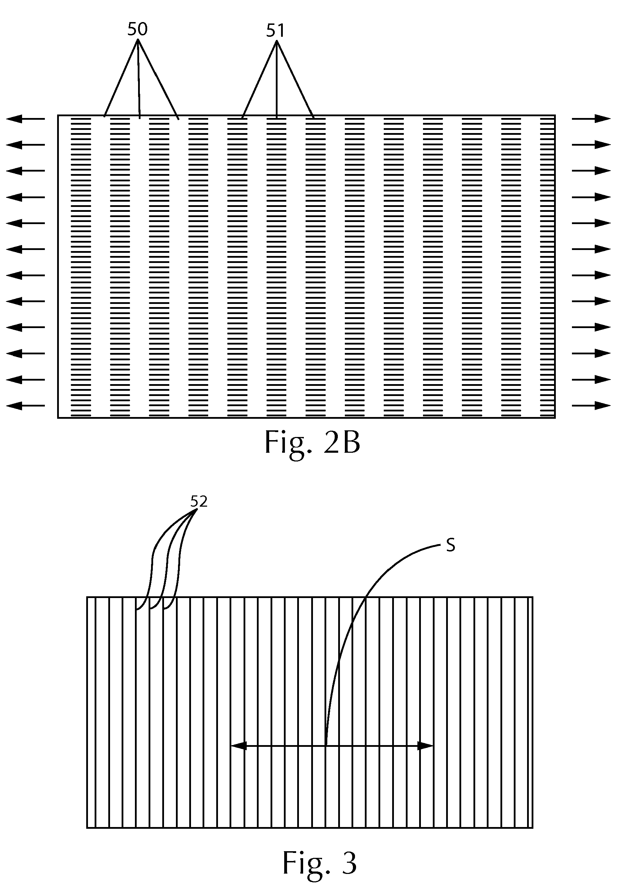

When first layer 10 and/or fourth layer 40 (if present) are formed of nonwoven web material(s), activation or incremental stretching has the effect of providing roughly linear zones of separation, elongation and/or breaks in fibers of the nonwoven web materials, substantially perpendicular to the stretch direction. Referring to Figs. 2A and 2B, when the laminate passes through the intermeshing teeth of the activation mechanism, the material is stretched over the teeth by varying amounts, most greatly in primary stretch zones 50, and to a lesser or minimal extent in secondary zones 51, as suggested in Fig. 2B. Thus, such separation, elongation and/or breaks in the fibers tend to occur in the primary stretch zones 50. Since the fibers would otherwise tend to resist stretching of the laminate, activation and the resulting separation, elongation and/or breaks in primary stretch zones 50 illustrated in Figs. 2A and 2B provide greatly increased extensibility to the laminate web in the direction of activation/incremental stretching, that would otherwise be kept limited by or would be undesirably and/or randomly destructive of, fibers of the nonwovens oriented along the direction of stretch.

In addition, in a laminate to be activated to impart extensibility in the cross direction, first layer 10 and/or fourth layer 40 (if included) may be selected such that the fibers thereof have an orientation or bias generally perpendicular to the direction of activation/incremental stretching. This may complement the activation process and its effects, by reducing the numbers of fibers that are separated or broken during activation and thereby reducing the number of loose or hanging, broken fibers that may result from the cross-direction stretching effected by the activation rollers. For example, a nonwoven web with fibers that have a machine-direction orientation or bias may be selected for first layer 10 and/or fourth layer 40. If the activation mechanism used activates/incrementally stretches the laminate in the cross-direction, fewer fibers will be separated or broken in the activation process. It may be a desired effect of activation or incremental stretching, however, to break and thereby create some loose ends of fibers, which may help to provide a soft, "fuzzy" appearance and tactile feel to the laminate.

When third layer 30 is a plastically deformable and/or ductile film as described above, activation or incremental stretching also will have the effect of permanently deforming/elongating the film in the direction and areas of stretch roughly corresponding or aligning, in the z-direction, with the primary stretch zones 50, as described above. Upon relaxation of the laminate after activation and elastic contraction of the second layer 20, the permanently elongated third layer (and with it, the fourth layer, if present) will be urged to find zones in which to gather. If third layer 30 is completely adhered to second layer 20, it will cause distortion of the shape and relaxed dimensions of the activated laminate, and/or will create a random, disorderly-appearing surface texture. For this reason, it may be desirable that third layer 30 be adhered to second layer 20 by a pattern that includes bonded and unbonded areas. Following activation, unbonded areas may provide zones in which fourth layer 40 (if present) and third layer 30 can separate from second layer 20.

The permanently, incrementally elongated materials of third and fourth layers 30, 40 may gather in these zones of separation, by z-direction displacement away from second layer 20. If an orderly pattern of bonded and unbonded areas between second and third layers 20, 30 is provided, a corresponding orderly pattern of zones of z-direction displacement may be created following activation. It will be appreciated then, that a variety of patterns of bonded and unbonded areas may be designed to create a corresponding variety of patterns of zones of z-direction displacement, with a dramatic visual and tactile effect. This can be exploited to manufacture activated stretch laminates with a variety of quilt-like or other patterned textures.

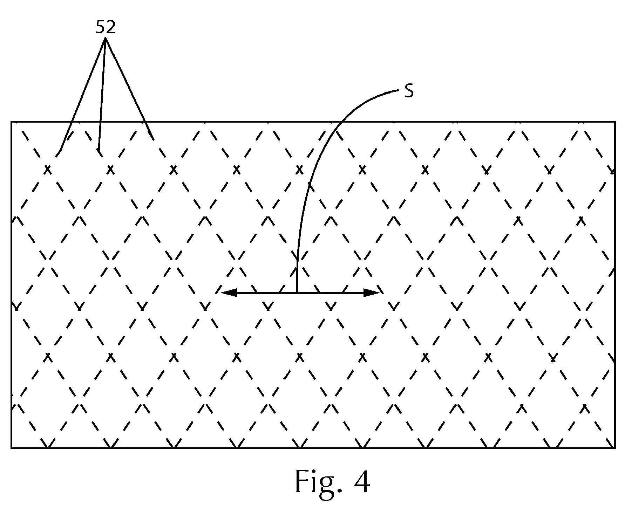

The pattern of bonded and unbonded areas may be created by applying a corresponding deposit of adhesive on either of second or third layers 20, 30 prior to passage of the layers through laminating rollers. Figs. 3 and 4 depict only two of any number of examples of patterns of adhesive that may be applied. When deposits 52 of adhesive are applied as shown, second and third layers 20, 30 are adhesively bonded together along the deposits of adhesive, after passage through a pair of laminating rollers, and unbonded areas will exist among/between the locations of the adhesive deposits 52. The pattern of adhesive may be applied by any suitable method, including but not limited to use of gravure rolls, reverse rolls, knife-over rolls, metering rods, slot die extruders, extruders and co-extruders, and air knife coaters. Other suitable methods for applying adhesive in a pattern are described in co-pending U.S. Application Ser. No. 13/052,139.

In the example adhesive deposit pattern suggested in Fig. 3, following activation/incremental stretching of the laminate in direction S, and subsequent relaxation, second and third layers 20, 30 may separate in the zones between the bonded areas (in the example of Fig. 3, the bonded areas approximate lines or line segments perpendicular to the activation/incremental stretch direction). The result is a dramatic corrugated or corduroy-like texture, with orderly gathers of layers of material (third and, if present, fourth layers 30, 40) displaced in the z-direction.

In the example adhesive deposit pattern suggested in Fig. 4, following activation/incremental stretching of the laminate in direction S, and subsequent relaxation, second and third layers 20, 30 may separate in the zones between the bonded areas (in the example of Fig. 4, the bonded areas approximate lines or line segments crossing the stretch direction S at angles of less than 90 degrees). The result is a dramatic diamond-pattern quilt-like texture, with orderly gathers of layers of material (third and, if present, fourth layers 30, 40) displaced in the z-direction. The effect can be further demonstrated upon subsequent stretching of the material as in end use, because the Poisson-effect "necking" that occurs upon stretching may cause gathering of layer 30 along a direction perpendicular to the direction of stretch.

In the example depicted in Fig. 4, it can be seen that the lines of adhesive deposits 52 are discontinuous, *i.e.,* dashed lines, broken lines or chains of line segments, with deposits of adhesive separated by gaps. This may be desirable to create a visual effect of stitching, as in a quilt. It may also be desirable when lines or other paths of adhesive deposits cross the stretch direction at any angle, *i.e.,* when they are not perpendicular to the stretch direction, as in Fig. 3. Such gaps in bonded areas enable the laminate to better accommodate stretch during activation/incremental stretching, with less potential for causing defects or destruction of the material. If a section of laminate in which layers 20 and 30 are fully bonded, with no unbonded areas, is passed through an activation mechanism, there is a greater potential that activation may cause tears or ruptures in one of both of the layers (particularly the elastomeric film layer) where they are fully bonded, particular where such fully bonded areas are coincident with the primary stretch zones 50 (Fig. 2B). However, at the same time, the presence of a plastically deformable and/or ductile film layer may serve to mitigate the negative effects on opacity and/or tensile strength of the laminate, through its ability to plastically deform and bridge across any tears that might occur in the elastic film layer in areas where the two layers are bonded together. For this reason the gaps in the lines of adhesive deposits 52 depicted in Fig. 4 may or may not be deemed desirable in all circumstances.

Some elastic films currently available are manufactured with thin "skins" of differing chemistry than the underlying elastic material. For example, some types of elastic film are manufactured with an underlying elastic material layer, and an overlying polyethylene layer on one or both sides. Such skins may be included to prevent "blocking," *i.e.,* sticking of the elastic material to itself, when gathered on a roll. Blocking can cause tearing or other problems when the film is unrolled for use in manufacturing. An elastic film that is formed of an elastic material layer and one or more overlying skins may be formed by coextrusion, or by lamination of elastic and polyethylene films shortly following their formation. The elastic material and the skin material may have chemistries that cause them to adhere together, or the elastic material may have adhesive properties that cause the elastic material to adhere directly to the skin, or alternatively, an adhesive may be deposited between the elastic material and the skin material to adhere them together. As an alternative to inclusion of an added plastically deformable and/or ductile polymer layer and a pattern of adhesive deposits to create a pattern of bonded areas as described above, to achieve the described effects and features, a pattern of non-adhesion might be created during the process of manufacturing a skinned elastic film. For example, a non-adhesion agent may be deposited in a suitable pattern upon either the elastic material or the skin material, or between them, during manufacture of the skinned elastic film, effectively the negative of creating a pattern of bonded areas by a deposit pattern of adhesive, described above. A suitable non-adhesion agent may include a wax, applied by spraying, slot-coating, gravure roll or other suitable technique. Where the elastomeric film and the skin are coextruded, a non-adhesion agent might be delivered to and interposed between them in a angle, *i.e.,* when they are not perpendicular to the stretch direction, as in Fig. 3. Such gaps in bonded pattern, by suitable equipment disposed proximate the extrusion die(s). Other suitable non-adhesion agents and methods for deposit are described in, for example, co-pending U.S. patent applications, Serial Nos. 11/413,483 and 11/413,545. Thus, for example, rather than applying a deposit 52 of adhesive between second and third layers, examples of which are illustrated in Figs. 3 and 4, the manufacturer may apply a patterned deposit of a non-adhesion agent. By way of example, to achieve effects similar to those achieved by the deposits 52 in Figs. 3 and 4, the non-adhesion agent would be applied in the areas between the areas for deposits 53 as shown in Figs. 3 and 4, *i.e.,* in a pattern of diamond shapes or strips.

As noted, an adhesive deposit pattern may be applied by any suitable process, and take any suitable form. Adhesives of the type typically used to manufacture articles of the type contemplated herein are generally translucent and substantially lacking in distinct color, particularly when, as is typical, they are very thinly applied. This is because, among other reasons, it is generally regarded as undesirable that adhesive deposits used to adhere components together, be visible to the consumer. However, as used in patterned deposits to form a stretch laminate as described herein, the adhesive may be imparted with a color, by addition of a tint or dye, and/or an opacifier, to impart any visible color and shade and increase its opacity. It will be appreciated that use of such colored and/or opacified adhesive to form a patterned deposit for purposes described herein, may have dramatic visual effects, such as making the pattern highly visible and/or enhancing an appearance of pattern depth, since the third layer 30 and fourth layer 40 (if present) may be substantially translucent or even substantially transparent. A colored adhesive may also be applied in a pattern in combination with addition of tint to the other layers such as the second and/or first layers, with visually complementary effects. For example, the second layer may be tinted a pink color and the adhesive may be tinted a light blue color, with the resulting visual effect being the impression of a lavender or similar blended color tracing the pattern and enhancing its appearance of depth.

Articles of the type contemplated herein are often printed with designs and/or images for ornamental purposes. However, nonwovens may not always serve as satisfactory substrates for printing for purposes herein, or may be difficult to satisfactorily imprint with a clear and bright design or image. An advantage provided by the inclusion of an additional film layer next to the elastomeric film layer as described herein, is that it provides alternative film surfaces upon which printing may be performed, or alternatively, provides a layer that may serve as a protective or containing layer over a printed surface. Many films such as PE films may provide satisfactory printing substrates. Referring again to Fig. 1, if third layer 30 is such a film layer, it can be appreciated that the either of the surfaces of layer 30 may be printed prior to lamination. Printing on the outside surface (relative Fig. 1, facing upward) of layer 30 may be preferable for greatest visibility of the imprinted designs and/or images through an outer fourth layer 40, if present. However, some inks used in printing may be insufficiently elastic or flexible after drying/curing, to stay completely adhered to the printed surface of the film during and following activation or incremental stretching, and some of the ink used for imprinting may flake off. If the outer surface (relative Fig. 1, the upper surface) of layer 30 is imprinted, and layer 40 is a nonwoven, this may be undesirable since ink particles could sift through the nonwoven, and have undesirable effects, or create a negative consumer impression. However, interior surface of layer 30 (relative Fig. 1, the lower surface) may also be printed. Films of chemical composition and thickness contemplated herein are generally somewhat translucent or even transparent, such that designs and/or images imprinted on one surface may be seen with fairly good clarity and color brightness looking at the other surface and through the film. Thus, a film third layer 30 may have imprinted designs and/or images on the interior surface thereof. Following lamination, the interior surface of layer 30 would be covered by layer 20, such that any ink particles that might flake off as a result of activation or stretching would be contained within the laminate. In another alternative, the surface of layer 20 facing layer 30 may be printed. In this alternative, again, the printing and any ink that may flake off as a result of activation or stretching would be contained within the laminate.

Because such imprinted designs and/or images would be viewed from the outside/opposite side of imprinting (*e.g.*, looking upon the outer surface of layer 40, such imprinted designs and/or images may be imprinted as mirror images of the intended viewable designs and/or images.

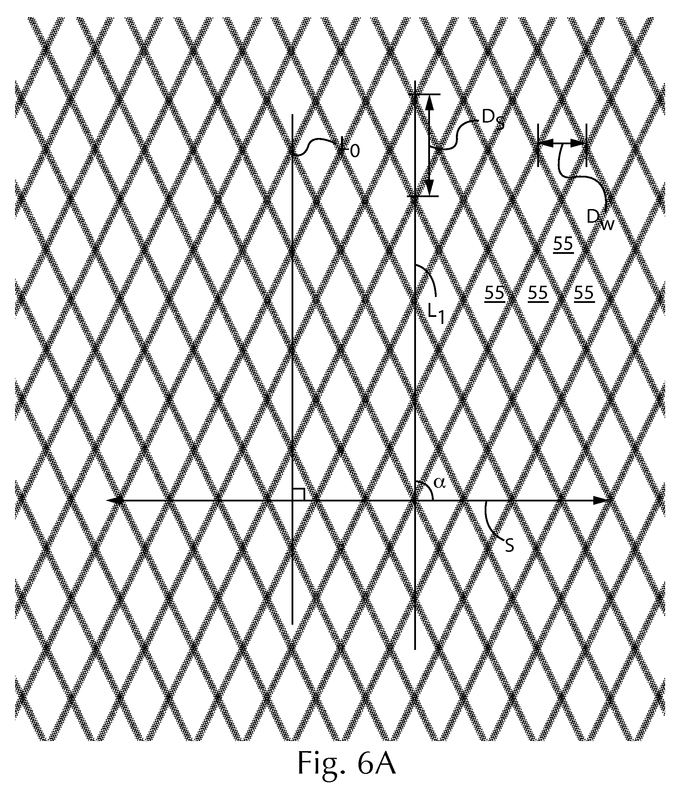

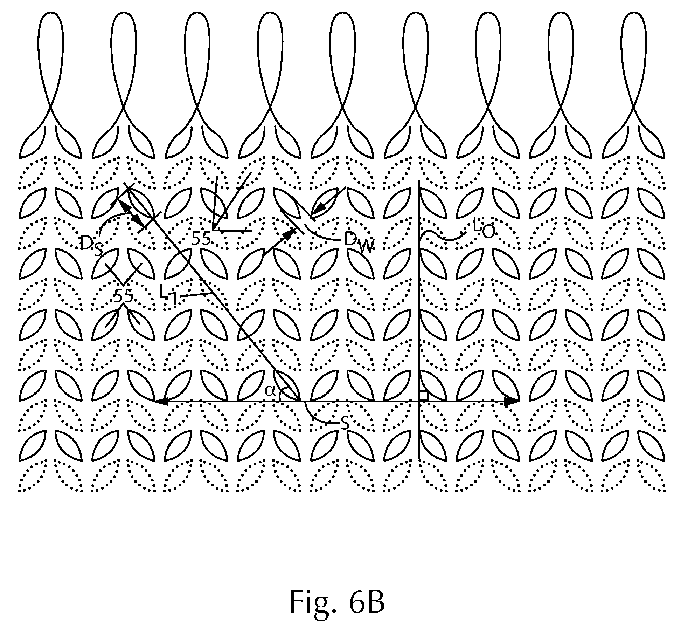

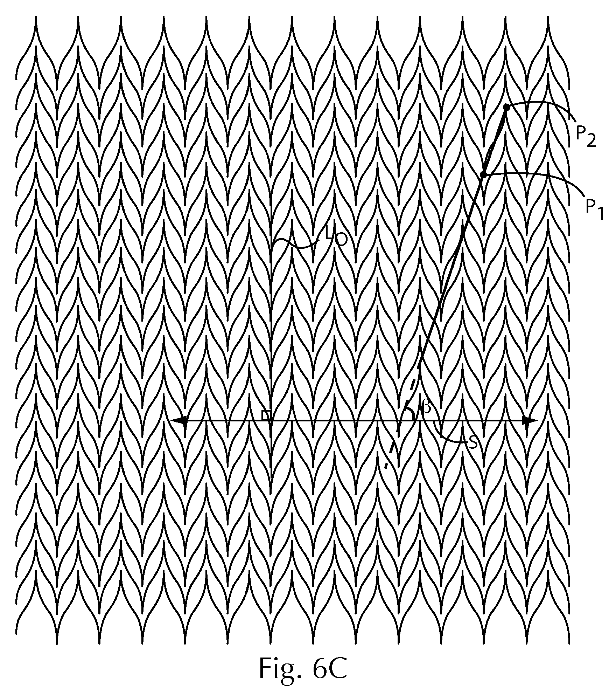

Print designs may be selected with features that visually call to attention or enhance the viewer's impression of stretchability and associated comfort and fit of the article of which the laminate is a component. A print design may include a pattern of shapes, lines, line segments, curves, images, etc. Without intending to be bound by theory, it is believed that certain features are particularly effective at visually enhancing perceptions of stretchability and comfort. For example, referring to Figs. 6A, 6B and 6C, three print designs are depicted. These patterns have features in common that are believed to enhance visual perceptions of stretchability and comfort. Each pattern has repeating shapes or curves arranged with repeating like features along lines $L_0$ that are substantially perpendicular to the stretch direction S. Each of the patterns in Figs. 6A and 6B include shapes (Fig.

6A, diamonds; Fig. 6B, leaf shapes). These shapes have longest length dimensions $D_L$, and width dimensions $D_W$ measured perpendicular to the length dimensions, and aspect ratios of $D_L/D_W$ greater than 1.0, more preferably greater than 1.5, and even more preferably greater than 2.0. The longest length dimensions $D_L$ lie along lines $L_1$ that form shape orientation angles $\alpha$, which are the smaller angles at the intersection with a line along the stretch direction S, of 45 degrees or more. This is believed important because of the visual effect created as such shapes are elongated in the stretch direction and flattened perpendicular to the stretch direction, upon stretching of the laminate. Alternatively, as shown in Fig. 6C, a pattern may be formed with elements including line segments and/or curves with starting and ending points $P_1$, $P_2$, where line segments connecting points $P_1$ and $P_2$ form feature orientation angles $\beta$, of 45 degrees or more, which is the smaller angle at the intersection of the $P_1$-$P_2$ line segment with a line along the stretch direction S. Referring to stretch direction S as an x-direction and an axis perpendicular to the stretch direction as a y-direction, it is believed that, generally, the pattern should include one or more series of substantially identical, repeated lines or line segments (*e.g.*, Fig. 6A), curves (Figs. 6B, 6C), or the same embodied in outlines or traces of shapes (Fig. 6B), that have both x-direction and y-direction components. This is believed important because portions of such elements shift and extend along the stretch direction, and appear to shift and/or compress perpendicularly thereto, during stretching, which is believed to enhance visual perceptions of stretchability. In contrast, a pattern comprising only rectangular shapes with sides aligned with the stretch direction would not have this two-dimensional shifting effect, and for that reason is believed not to create such perception, or not so dramatically. Expressed differently, it is believed that repeated design elements each should include one or more lines, line segments, curves or outlines that extend diagonally relative the stretch direction, preferably at an angle greater than 45 degrees relative thereto, when the laminate is in relaxed condition.

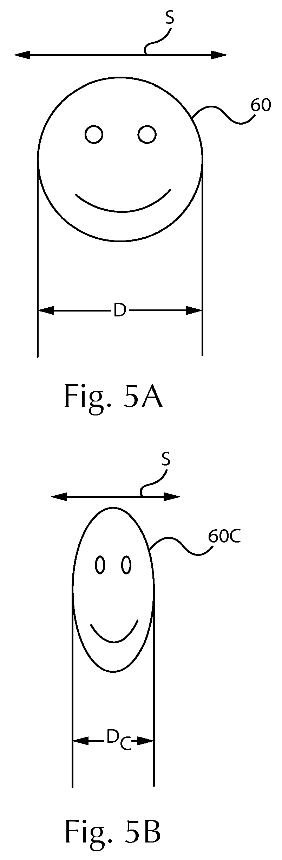

In view of the activated/incrementally stretched, and elastically stretchable features of the laminate contemplated, it may be desired that any imprinted designs and/or images be designed such that their appearance as imprinted has proportions that are compressed, from their intended appearance as in use, along the direction of stretch. When imprinted in such a compressed configuration, upon stretching of the laminate as in use, the designs and/or images will be given their intended proportions and appearance. Thus, for example, decorative images of objects such as flowers, animals, cartoon or popular media characters, toys, etc., may have compressed proportions and an incoherent or distorted appearance when the laminate is relaxed, but natural proportions and a natural and/or coherent appearance when the laminate is stretched as in use. A method for manufacturing a stretch laminate with such imprinted designs and/or images may include the steps of (a) creating a design or image having original proportions; (b) proportionately compressing the design or image along the stretch direction to create a proportionately compressed version of the design or image, having proportions that are compressed along the stretch direction; and (c) imprinting the proportionately compressed version of the design or image onto a component layer, *e.g.,* a film forming a component of a stretch laminate, and (d) laminating the component layer with other component layers, to form the stretch laminate. For example, referring to Fig. 5A, a design or image 60 having original proportions may be created, having a dimension D along stretch direction S. The image may be proportionately compressed to create a proportionately compressed version 60c having a proportionately compressed dimension $D_C$ along stretch direction S. Proportionately compressed version 60c may be imprinted onto a component layer, and then the component layer may be laminated with other component layers and processed as suitable to form a stretch laminate that is stretchable in stretch direction S. When such a method is followed, the design or image in its original proportions, or approximation thereof, may be made to appear upon suitable stretching of the laminate, as in use. Thus, for example, if a design or image has a dimension D in the stretch direction in its original proportions, it may be proportionately compressed along the stretch direction such that a corresponding proportionately compressed dimension $D_C$ may be measured where

$$D_C = D / (1 + e),$$

and *e* is the amount of elongation of the stretch laminate in the stretch direction in expected normal use, expressed as a percentage of its relaxed dimension. The proportionately compressed version of the design or image may then be imprinted upon a laminate layer by any suitable printing technique, with the direction of compression of the design or image aligned with the stretch direction, and the laminate may be then be formed including the printed laminate layer bearing the proportionately compressed version. Upon stretching of the laminate by amount *e,* the imprinted, proportionately compressed design or image will be stretched so as to attain original dimension D. It will be appreciated that, as the laminate upon stretching approaches expected elongation *e,* the imprinted design or image will approach its original proportions and will begin to become recognizable and/or coherent as such before elongation *e* is fully reached.

It will be appreciated that the principle and method of designing, compressing and imprinting designs and/or images described above may also be applied to designing, compressing and imprinting or otherwise applying patterns of adhesive for bonding the second and third layers, 20, 30, to create patterns of bonded and unbonded areas between these layers, for the beneficial effects described above.

The print designs, images, and patterns described above may be coordinated and/or aligned with the pattern or activation and/or the pattern of bonding between second and third layers 20, 30, described above. For example, the print pattern may have a repeat frequency that is equal to, or is a whole-number multiple or divisor of, the repeat frequency of the bonding pattern, or the repeat frequency of the activation pattern, or both. Such coordination and/or alignment may improve the apparent uniformity and regularity of the print pattern, which may help enhance perceptions of material quality.

As noted, fourth layer 40 may be included, and may be formed of flocking or any suitable nonwoven web material. When a fourth layer 40 is included and the laminate is formed as described above, the described bonding pattern between layers 20, 30 will appear on the outer surface of fourth layer 40. As a result, a stretch laminate is provided which can have a pleasing, patterned texture, with visual and tactile softness attributes enhanced by the presence of the nonwoven fibers at the surface. Fourth layer 40 may be bonded to third layer 30 by an applied film of adhesive, a pattern of adhesive or a pattern of thermal bonds. A pattern of substantially linear adhesive deposit paths or a pattern of spiral adhesive deposit paths, applied along lines or columns substantially perpendicular to the stretch direction, may be desired in some circumstances. Such spiral deposit paths may be effective for accommodating stretch in the stretch direction with minimized potential for fiber separation from the third layer, through activation and in subsequent use, striking a good balance between conservation of adhesive material and effectiveness at binding fibers to the third layer.

In another example, both the third layer 30 and the fourth layer 40 may be formed predominately or entirely of polyethylene, the third layer 30 being a plastically deformable and/or ductile film and the fourth layer 40 being a nonwoven of polyethylene fibers. In this example, fourth layer 40 and third layer 30 may be bonded together by, *e.g.,* a pattern of thermal/fused bonds, which are more easily formed as a result of the chemistry compatibility between the respective PE layers, and the relatively low melting temperature of PE. This allows for a particularly low basis weight fourth layer 40 to be used (which results in material cost savings), while still providing the advantage of a softer appearance and feel as a result of the presence of fibers at the outer surface of the laminate. In a related example, a PE film third layer 30 and a PE nonwoven fiber fourth layer 40 may be co-formed / coextruded in a manner that results in thermal bonding between the respective layers concurrently with or shortly after their formation. In still another related example, the nonwoven fourth layer 40 may be formed of bicomponent or multicomponent fibers including a PE component; wherein the PE component facilitates thermal bonding of the fibers to a PE third layer 30. Bicomponent or multicomponent fibers may enhance visual and tactile softness attributes even further as a consequence of their curliness.

It will be appreciated, also, that a laminate may be formed having the features described above, but in which layers of plastically deformable and/or ductile polymeric film are disposed on <u>both</u> sides of the layer of elastic material, and the laminate is activated/incrementally stretched and processed further as deemed suitable, in accordance with the description above. In this example, patterns of bonded and unbonded areas between the elastic material layer and respective plastically deformable and/or ductile film layers, and associated patterns of z-direction displacement, can be made to be present on both sides of the laminate product.

An activated/incrementally-stretched, zero-strain stretch laminate as described above provides the advantages recognized in the art to be associated with zero-strain stretch laminates, including relative cost effectiveness, ease of manufacture at relatively high line speeds, and evenly distributed stretch and tension characteristics. The laminate described provides further advantages as well. The added layer of plastically deformable and/or ductile polymer film adds an appearance of greater continuity, and opacity to the outer layer(s) of the laminate. The need for adding opacifying agents or whiteners (such as titanium dioxide) to the elastomeric film and/or nonwoven layers may be reduced or eliminated. The plastically deformable and/or ductile film substantially reduces the visual effect of a glossy elastomeric film layer shining through the outer nonwoven layer upon stretch as in end use, which may be perceived negatively as creating a plastic-like appearance, where the objective is a cloth-like appearance. Printing on film is easier and less costly than printing on nonwoven web material, and the plastically deformable and/or ductile polymer film may be tinted or printed for enhanced visual effects. The plastically deformable and/or ductile polymer film may also be embossed with ornamental patterns, as an additional visual enhancement. The plastically deformable and/or ductile polymer film adds tensile strength and puncture resistance to the web, and may thereby enable a reduction in the basis weight of the nonwoven layer(s) included. The ductility of the film, together with the pattern of bonded and unbonded areas, provides for a stretch laminate that has a dramatic, textured visual appearance and tactile feel, and a thicker, softer, more luxurious appearance.

An activated, zero-strain stretch laminate as described herein may be used to form one or more components of a wearable, disposable absorbent article, such as a diaper or training pant. The stretch laminate may be suitable to form fastening members or ears of disposable diapers, as described in, for example, co-pending U.S. Pat. App. Ser. No. 12/904,220. The stretch laminate may be suitable to form side or hip panels, waist bands, or belt-type waist bands of disposable training pants, as described in, for example, U.S. Pat. No. 6,120,487 and U.S. Pat. App. Ser. No. 12/819,454.

In some circumstances it may be desirable to form a stretch laminate simultaneously having two or more differing patterns of bonded and unbonded areas between layers 20 and 30. For example, it may be desirable for decorative or perceptual purposes, to have, *e.g.,* the pattern depicted in Fig. 4 disposed along a first portion of the laminate, and the pattern depicted in Fig. 3 disposed along a second portion of the laminate. It may be desirable that such a laminate be used to form fastening members, ears or side panels of a training pant, whereby a first pattern is disposed on an upper portion (proximate the waist opening), while a second pattern is disposed on a lower portion (proximate the leg opening) of the fastening member, ear or side panel.

TEST METHODS

Obtain samples of subject material that have not been activated or otherwise previously substantially stretched. Samples should be sufficient to provide for a gauge length of at least 15 mm along the direction of stretch in the Test, and should be of a constant width (perpendicular to the direction of stretch in the Test) of at least 5 mm.

The Hysteresis Test can be used to various specified strain values. The Hysteresis Test utilizes a commercial tensile tester (e.g., from Instron Engineering Corp. (Canton, MA), SINTECH-MTS Systems Corporation (Eden Prairie, MN) or equivalent) interfaced with a computer. The computer is used to control the test speed and other test parameters and for collecting, calculating, and reporting the data. The tests are performed under laboratory conditions of 23°C ± 2°C and relative humidity of 50% ± 2%. The samples are conditioned for 24 hours prior to testing.

Test Protocol

1. Select the appropriate grips and load cell. The grips must have flat surfaces and must be wide enough to grasp the sample along its full width. Also, the grips should provide adequate force to ensure that the sample does not slip during testing. The load cell is selected so that the tensile response from the sample tested is between 25% and 75% of the capacity of the load cell used.

2. Calibrate the tester according to the manufacturer's instructions.

3. Set the distance between the grips (gauge length) at 15 mm.

4. Place the sample in the flat surfaces of the grips such that the uniform width lies along a direction perpendicular to the gauge length direction. Secure the sample in the upper grips, let the sample hang slack, then close the lower grips. Set the slack preload at 0.02 N/cm. This means that the data collection starts when the slack is removed (at a constant crosshead speed of 10mm/min) with a force of 0.02 N/cm. Strain is calculated based on the adjusted gauge length ($l_{ini}$), which is the length of the sample in between the grips of the tensile tester at a force of 0.02 N/cm. This adjusted gauge length is taken as the initial sample length, and it corresponds to a strain of 0%. Percent strain at any point in the test is defined as the change in length divided by the adjusted gauge length times 100.

5(a) First cycle loading: Pull the sample to the specified strain (herein, 100%) at a constant cross head speed of 100 mm/min. Report the stretched sample length between the grips as $l_{max}$.

5(b) First cycle unloading: Hold the sample at the specified strain for 30 seconds and then return the crosshead to its starting position (0% strain or initial sample length, $l_{ini}$) at a constant cross head speed of 100 mm/min. Hold the sample in the unstrained state for 1 minute.

5(c) Second cycle loading: Pull the sample to the specified strain at a constant cross head speed of 100 mm/min.

5(d) Second cycle unload: Next, return the crosshead to its starting position (i.e. 0% strain) at a constant cross head speed of 100 mm/min.

A computer data system records the force exerted on the sample during the test as a function of applied strain. From the resulting data generated, the following quantities are reported (note that loads are reported as force divided by the width of the sample and do not take into account the thickness of the sample):

    i. Length of sample between the grips at a slack preload of 0.02 N/cm ($l_{ini}$) to the nearest 0.001 mm.

    ii. Length of sample between the grips on first cycle at the specified strain ($l_{max}$) to the nearest 0.001 mm.

    iii. Length of sample between the grips at a second cycle load force of 0.02 N/cm ($l_{ext}$) to the nearest 0.001 mm.

    iv. % set, which is defined as ($l_{ext}$ - $l_{ini}$) / ($l_{max}$ - $l_{ini}$) * 100% to the nearest 0.01%.

The testing is repeated for six separate samples and the average and standard deviation reported.

The Hysteresis Test can be suitably modified depending on the expected attributes and/or properties of the particular material sample to be measured. For example, the Test can be suitably modified where a sample of the length and width specified above are not available from the subject pant.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document referenced, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A stretch laminate web material, including a first layer of a polymeric nonwoven web material or a flocking material and a second layer of an elastomeric material bonded to the first layer, **characterized in that**:

   the stretch laminate material further comprises a third layer of a polymeric film material bonded to the second layer, in a pattern that includes bonded and unbonded areas, the polymeric film material comprising polyethylene;
   wherein the stretch laminate has been activated along a stretch direction, such that the stretch laminate is stretchable along the stretch direction, and zones of separation between the second and third layers are present at the unbonded areas.

2. A stretch laminate web material, including a first layer of a polymeric nonwoven web material or a flocking material and a second layer of an elastomeric material bonded to the first layer, **characterized in that**:

   the stretch laminate material further comprises a third layer formed of a ductile polymeric film material bonded to the second layer, in a pattern that includes bonded and unbonded areas;
   wherein the stretch laminate has been activated along a stretch direction, such that the stretch laminate is stretchable along the stretch direction, and zones of separation between the second and third layers are present at the unbonded areas.

3. The stretch laminate web material of either of Claims 1 or 2 further comprising a fourth layer of polymeric nonwoven web material or flocking material bonded to the third layer.

4. The stretch laminate material of any of the preceding claims wherein the third layer is an apertured film.

5. The stretch laminate material of any the preceding claims wherein the third layer is bonded to the second layer by deposits of adhesive arranged along lines transverse to the stretch direction.

6. The stretch laminate material of any of Claims 1 - 4 wherein the fourth layer is bonded to the third layer by deposits of adhesive arranged along lines perpendicular with the stretch direction.

7. The stretch laminate material of any the preceding claims wherein the elastomeric material comprises film.

8. The stretch laminate material of Claims 1 - 6 wherein the elastomeric material comprises scrim formed of polymeric elastomeric material.

9. The stretch laminate material of Claims 1 - 6 wherein the elastomeric material comprises strands or strips with their longest dimensions oriented along the stretch direction.

10. A disposable absorbent article adapted to be worn about the lower torso, comprising:

a chassis formed of a backsheet, topsheet and absorbent core disposed between the backsheet and topsheet, the chassis having a width; and
a side panel or fastening member formed of the stretch laminate material of any of the preceding claims, oriented such that the stretch direction extends substantially along the direction of the width.

**Patentansprüche**

1. Dehnungslaminatbahn-Material, das eine erste Schicht aus einem polymeren Vliesbahnmaterial oder einem Beflockungsmaterial und eine zweite Schicht aus einem Elastomermaterial, die an die erste Schicht gebunden ist, umfasst, **dadurch gekennzeichnet, dass**:

das Dehnungslaminatmaterial ferner eine dritte Schicht aus einem Polymerfolienmaterial, die an die zweite Schicht gebunden ist, in einem Muster umfasst, das gebundene und nicht gebundene Bereiche umfasst, wobei das Polymerfolienmaterial Polyethylen umfasst;
wobei das Dehnungslaminat entlang einer Dehnungsrichtung derart aktiviert wurde, dass das Dehnungslaminat entlang der Dehnungsrichtung dehnbar ist, und an den nicht gebundenen Bereichen Trennungszonen zwischen der zweiten und dritten Schicht vorhanden sind.

2. Dehnungslaminatbahn-Material, das eine erste Schicht aus einem polymeren Vliesbahnmaterial oder einem Beflockungsmaterial und eine zweite Schicht aus einem Elastomermaterial, die an die erste Schicht gebunden ist, umfasst, **dadurch gekennzeichnet, dass**:

das Dehnungslaminatmaterial ferner eine dritte, aus einem dehnbaren Polymerfolienmaterial gebildete Schicht, die an die zweite Schicht gebunden ist, in einem Muster umfasst, das gebundene und nicht gebundene Bereiche umfasst;
wobei das Dehnungslaminat entlang einer Dehnungsrichtung derart aktiviert wurde, dass das Dehnungslaminat entlang der Dehnungsrichtung dehnbar ist, und an den nicht gebundenen Bereichen Trennungszonen zwischen der zweiten und dritten Schicht vorhanden sind.

3. Dehnungslaminatbahn-Material nach einem der Ansprüche 1 oder 2, das ferner eine vierte Schicht aus polymerem Vliesbahnmaterial oder Beflockungsmaterial, die an die dritte Schicht gebunden ist, umfasst.

4. Dehnungslaminatmaterial nach einem der vorstehenden Ansprüche, wobei die dritte Schicht eine mit Öffnungen versehene Folie ist.

5. Dehnungslaminatmaterial nach einem der vorstehenden Ansprüche, wobei die dritte Schicht an die zweite Schicht durch Anlagerungen von Klebstoff gebunden ist, die entlang Linien angeordnet sind, die quer zur Dehnungsrichtung verlaufen.

6. Dehnungslaminatmaterial nach einem der Ansprüche 1-4, wobei die vierte Schicht an die dritte Schicht durch Anlagerungen von Klebstoff gebunden ist, die entlang Linien angeordnet sind, die lotrecht zur Dehnungsrichtung sind.

7. Dehnungslaminatmaterial nach einem der vorstehenden Ansprüche, wobei das Elastomermaterial Folie umfasst.

8. Dehnungslaminatmaterial nach den Ansprüchen 1-6, wobei das Elastomermaterial Mull umfasst, der aus polymerem Elastomermaterial gebildet ist.

**9.** Dehnungslaminatmaterial nach den Ansprüchen 1-6, wobei das Elastomermaterial Stränge oder Streifen umfasst, die mit ihren längsten Abmessungen entlang der Dehnungsrichtung ausgerichtet sind.

**10.** Einweg-Absorptionsartikel, der dazu konzipiert ist, um den Unterleib herum getragen zu werden, und Folgendes umfasst:

eine Grundeinheit, die aus einer Unterschicht, einer Oberschicht und einem zwischen der Unterschicht und der Oberschicht angeordneten Absorptionskern gebildet ist, wobei die Grundeinheit eine Breite aufweist; und
ein aus dem Dehnungslaminatmaterial nach einem der vorstehenden Ansprüche gebildetes Seitenfeld oder Befestigungselement, das so ausgerichtet ist, dass die Dehnungsrichtung im Wesentlichen entlang der Richtung der Breite verläuft.

## Revendications

**1.** Matériau de nappe stratifié étirable, incluant une première couche d'un matériau de nappe non tissée polymère ou d'un matériau de flocage et une deuxième couche d'un matériau élastomère liée à la première couche, **caractérisé en ce que** :

le matériau stratifié étirable comprend en outre une troisième couche d'un matériau de film polymère liée à la deuxième couche, dans un motif qui inclut des zones liées et non liées, le matériau de film polymère comprenant du polyéthylène ;
dans lequel le stratifié étirable a été activé le long d'une direction d'étirement, de telle sorte que le stratifié étirable est étirable le long de la direction d'étirement, et des zones de séparation entre les deuxième et troisième couches sont présentes au niveau des zones non liées.

**2.** Matériau de nappe stratifié étirable, incluant une première couche d'un matériau de nappe non tissée polymère ou d'un matériau de flocage et une deuxième couche d'un matériau élastomère liée à la première couche, **caractérisé en ce que** :

le matériau stratifié étirable comprend en outre une troisième couche formée d'un matériau de film polymère ductile lié à la deuxième couche, dans un motif qui inclut des zones liées et non liées ;
dans lequel le stratifié étirable a été activé le long d'une direction d'étirement, de telle sorte que le stratifié étirable est étirable le long de la direction d'étirement, et des zones de séparation entre les deuxième et troisième couches sont présentes au niveau des zones non liées.

**3.** Matériau de nappe stratifié étirable selon la revendication 1 ou la revendication 2, comprenant en outre une quatrième couche de matériau de nappe non tissée polymère ou de matériau de flocage liée à la troisième couche.

**4.** Matériau stratifié étirable selon l'une quelconque des revendications précédentes, dans lequel la troisième couche est un film perforé.

**5.** Matériau stratifié étirable selon l'une quelconque des revendications précédentes, dans lequel la troisième couche est liée à la deuxième couche par des dépôts d'adhésif disposés le long de lignes transversales à la direction d'étirement.

**6.** Matériau stratifié étirable selon l'une quelconque des revendications 1 à 4, dans lequel la quatrième couche est liée à la troisième couche par des dépôts d'adhésif disposés le long de lignes perpendiculaires à la direction d'étirement.

**7.** Matériau stratifié étirable selon l'une quelconque des revendications précédentes, dans lequel le matériau élastomère comprend un film.

**8.** Matériau stratifié étirable selon les revendications 1 à 6, dans lequel le matériau élastomère comprend un canevas formé de matériau élastomère polymère.

**9.** Matériau stratifié étirable selon les revendications 1 à 6, dans lequel le matériau élastomère comprend des brins ou bandes dont les dimensions de plus grande longueur sont orientées le long de la direction d'étirement.

**10.** Article absorbant jetable conçu pour être porté autour de la partie inférieure du tronc, comprenant :

un châssis formé d'une feuille de fond, d'une feuille de dessus et d'une âme absorbante disposée entre la feuille de fond et la feuille de dessus, le châssis possédant une largeur ; et
un pan latéral ou élément de fixation formé du matériau stratifié étirable selon l'une quelconque des revendications précédentes, orienté de telle sorte que la direction d'étirement s'étend essentiellement le long de la direction de la largeur.

Fig. 1

Fig. 2A

50    51

Fig. 2B

52

S

Fig. 3

Fig. 4

Fig. 5A

Fig. 5B

Fig. 6A

Fig. 6B

Fig. 6C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5246433 A, Hasse
- US 5569234 A, Buell
- US 6120487 A, Ashton
- US 6120489 A, Johnson
- US 4940464 A, Van Gompel
- US 5092861 A, Nomura
- US 20030233082 A1
- US 5897545 A, Kline
- US 5957908 A, Kline
- US 5266392 A, Land
- US 6645569 B, Cramer
- US 6863933 B, Cramer
- US 7112621 B, Rohrbaugh
- US 338603 A
- US 10338610 B, Cramer
- US 13005237 B, Lu
- US 6632385 B
- US 6803103 B
- US 20060057921 A
- US 20040131820 A
- US 5518801 A
- US 5691035 A
- US 5723087 A
- US 5891544 A
- US 5968029 A
- US 3929135 A, Thompson
- US 4324246 A, Mullane
- US 4463045 A, Ahr
- US 4629643 A, Curro
- US 4637819 A, Ouellette
- US 4839216 A, Curro
- US 5006394 A, Baird
- US 5366782 A, Curro
- WO 9516746 A
- US 5571096 A, Dobrin
- US 5167897 A
- US 5156793 A
- US 5143679 A
- US 288095 A
- US 10288126 B
- US 10429433 B
- US 11410170 B
- US 11811130 B
- US 11899656 B
- US 11899810 B
- US 11899811 B
- US 11899812 B
- US 12204844 B
- US 12204849 B
- US 12204854 B
- US 12204858 B
- US 12204864 B
- US 052139 A
- US 413483 A
- US 11413545 B
- US 904220 A
- US 819454 A